# EUROPÄISCHE PATENTANMELDUNG

(11) **EP 2 557 047 A1**
(43) Veröffentlichungstag der Anmeldung: **13.02.2013**
(21) Anmeldenummer: 11006487.0
(22) Anmeldetag: 08.08.2011
(51) Int. Cl.: B65D 8/04

(54) **Behälter zum lagern sowie verfeinern eines alkoholischen Getränks (Doublewood single cask)**

(71) Anmelder: Sommer, Günter, 7530 Sta. Maria v.M. (CH)
(72) Erfinder: Sommer, Günter, 7530 Sta. Maria v.M. (CH)

(57) **Zusammenfassung**

Die vorliegende Erfindung betrifft einen Behälter zum Lagern eines alkoholischen Getränks. Der Behälter besteht dabei aus einer innersten Lage zusammengesetzter Holzteile, wobei diese Holzteile aus mehreren, durch vorab eingelagerte alkoholische Getränke mit Aromen imprägniert sind.
Ferner betrifft die Erfindung ein Verfahren zur Reifung und/oder Veredelung eines alkoholischen Getränks.
In der Herstellung dieses erfindungsgemässen Behälters entstehen nur unwesentliche Mehrkosten. Die Lagerlogistig vereinfacht sich dadurch, das nicht mit mehreren Fässern gelagert und umgefüllt wird, sondern die gesamte Reifezeit in einem Behälter gelagert werden kann. Produktverluste durch umfüllen werde ausgeschlossen, die Fasskosten werden reduziert und Rohstoffe eingespart. Ein Produkt aus dieser Lagerung, das üblicherweise nur aus mehreren Fässern möglich ist; und somit kein single cask, lässt sich im erfindungsgemässen Behälter als z.B. doublewood single cask Whisky, erstmals herstellen.

## Beschreibung

Die vorliegende Erfindung bezieht sich auf einen Behälter zur Lagerung und Reifung eines alkoholischen Getränks, insbesondere einer Spirituose nach dem Oberbegriff des Anspruch 1 Sowie auf ein Verfahren zum Verfeinern und zur Intensivierung des Reifeprozesses gemäss dem Oberbegriff des Anspruchs 7.

Durch Lagerung in einem Holzfass erhalten alkoholische Getränke besondere Geschmacksnoten. Beispielsweise kann z.B. Wein in Holzfässern ausgebaut, wobei im Holz vorhandene Geschmacksstoffe durch den Wein aus dem Holz gelöst und in den Wein übergehen, ebenso werden Aromen des Weines im Holz gelagert. Die gleiche vorgehensweise wird auch bei der Lagerung von Whisky/Whiskey verwendet.

Eine besondere Bedeutung spielt die Holzfasslagerung bei der Reifung von Whisky/Whiskey. In der Europäischen Union z.B. ist eine Reifung von mindestens drei Jahren im Holzfass nötig, damit Alkohol die Bezeichnung "Whisky" tragen darf. Während dieses Reifeprozesses, nimmt der Alkohol die Geschmackstoffe aus dem Holz auf, welche diesem den charakteristischen Geschmack verleihen. Hierbei dringt der Alkohol mit den Jahren immer tiefer in das Holz ein und kann dabei immer unterschiedlichere Geschmacksnoten entwickeln, je nach Dauer und Art der Lagerung.

Die Aufgabe der vorliegenden Erfindung liegt darin, die verschiedenen Holzarten verschiedener Fässer zu kombinieren um so mit einer "Ein Fass" Lagerung unterschiedliche Aromen in die Spirituose zu bekommen.

Der erfindungsgemässe Behälter eignet sich zum Lagern von alkoholischen Getränken, insbesondere Spirituosen, und besteht aus mindestens einer innersten Lage zusammengesetzter Holzteile, welche verschiedene Aromen aufweisen können, welche durch vorherige Lagerung anderer alkoholischer Getränke in das Holz eingedrungen sind. Durch diese Aromen ist es möglich, einem alkoholischen Getränk verschiedene Geschmacksnoten zu verleihen. Die innerste Lage ist dabei diejenige, welche direkten Kontakt zum Alkohol hat.

Im erfindungsgemässen Behälter werden die Holzteile der innersten Lage aus unterschiedlich imprägnierten Fässern kombiniert um so ein Aromenmix zu erzeugen.

Als alkoholisches Getränk im Sinne der Anmeldung, wird eine Flüssigkeit verstanden, welche für den Verzehr hergestellt wird und einen Alkoholgehalt von mehr als 0,5 % aufweist. Der Begriff umfasst dabei Getränke, deren Alkoholgehalt durch Gärung und/oder Alkoholbrand/ Destillation hergestellt wurde. Besonders bevorzugt ist das alkoholische Getränk dabei ein Malzbrand. Durch Lagerung in einem erfindungsgemässen Behälter lässt sich ein Whisky produzieren.

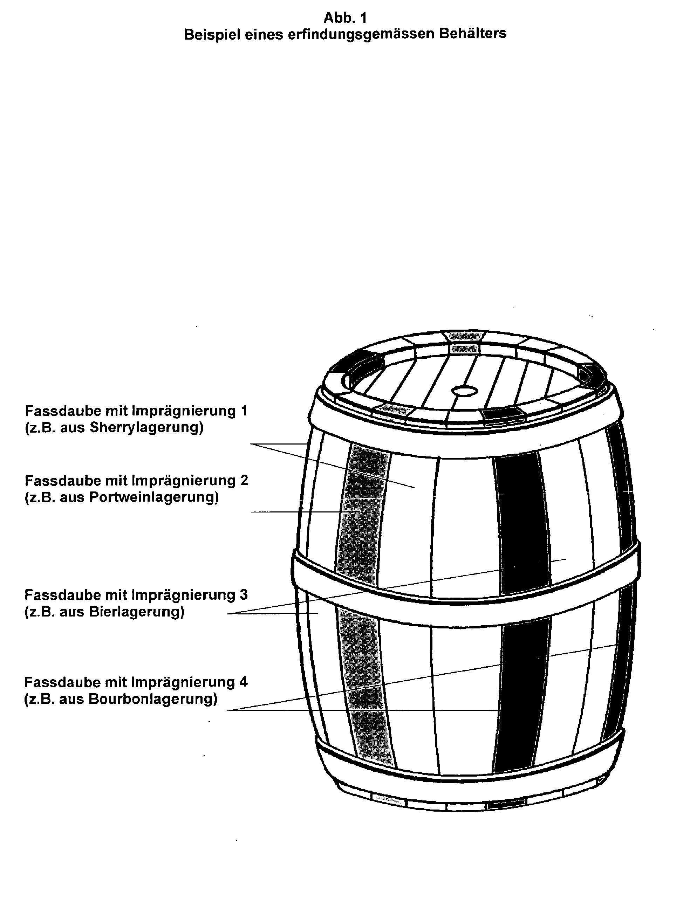

## Patentansprüche

1. Behälter zum Lagern von alkoholischen Getränken, insbesondere Spirituosen, bestehend aus mindestens einer innersten Lage zusammengesetzter Holzteile, **dadurch gekennzeichnet** das die Holzteile aus mehreren verschiedenen Fassdauben bestehen.

2. Behälter nach Anspruch 1, **dadurch gekennzeichnet, dass** der Behälter ein Fass ist, welches aus einzelnen Fassdauben, einem Deckel sowie einem Boden besteht.

3. Behälter nach Anspruch 2, **dadurch gekennzeichnet, dass** die Fassdauben und/oder der Deckel und/oder der Boden aus mehreren, unterschiedlich imprägnierten Holzteilen bestehen.

4. Behälter nach Anspruch 3, **dadurch gekennzeichnet**, das die Holzeile aus Holz einer oder unterschiedlicher Holzarten bestehen.

5. Behälter nach Anspruch 1 bis 4, **dadurch gekennzeichnet, dass** die Holzteile aus vorgängig zur Lagerung einer Spirituose wie z.B. Burbon, Cherry, Rum, Whisky/Whiskey, Bier, Portwein, Wein benutzen Behältern, insbesondere Fässer, stammen. Des weiteren können auch neue Fassdauben roh, getoastet oder geröstet mit verwendet werden.

6. Behälter nach einem der Ansprüche 1 bis 5, **dadurch gekennzeichnet, dass** die Holzteile aus vorgängig zur Lagerung von alkoholischen Getränken benutzten Behältern, insbesondere Fässern, stammen.

7. Verfahren zum Reifen eines alkoholischen Getränkes, insbesondere einer Spirituose, **dadurch gekennzeichnet, dass** das alkoholische Getränk in einem Behälter nach einem der Ansprüche 1 bis 6 gelagert wird.
